# EUROPÄISCHE PATENTSCHRIFT

(11) **EP 3 586 013 B1**
(45) Veröffentlichungstag und Bekanntmachung des Hinweises auf die Patenterteilung: **04.10.2023**
(21) Anmeldenummer: 18707884.5
(22) Anmeldetag: 21.02.2018
(51) Int. Cl.: F16B 7/18, F16B 37/04

(54) **BEFESTIGUNGSBAUGRUPPE**
FASTENING ASSEMBLY
MODULE DE FIXATION

(30) Priorität: 23.02.2017 DE 102017103769
(43) Veröffentlichungstag der Anmeldung: 01.01.2020
(73) Patentinhaber: MÜPRO Services GmbH, 65205 Wiesbaden (DE)
(72) Erfinder: ROOS, Dominik, 65510 Idstein Wörsdorf (DE); ALT, Janosch, 66557 Illingen (DE); EPING, Udo, 64297 Darmstadt (DE)
(74) Vertreter: Boult Wade Tennant LLP
(86) Internationale Anmeldenummer: PCT/EP2018/054299
(87) Internationale Veröffentlichungsnummer: WO 2018/153928

(56) Entgegenhaltungen:
- EP-A1- 0 978 663
- EP-A1- 1 902 222
- WO-A1-2016/188708

## Beschreibung

Die Erfindung betrifft eine Befestigungsbaugruppe zur Befestigung einer Last an einer Profilschiene, die einen im Wesentlichen C-förmigen Querschnitt und einen Längsschlitz aufweist, wobei die Befestigungsvorrichtung eine Deckplatte zur Auflage auf der Profilschiene, indem z.B. ihre Länge und/oder Breite größer ist als die Breite des Längsschlitzes der Profilschiene, eine Gewindeplatte, die eine Gewindebohrung aufweist und eine Länge größer als die Breite des Längsschlitzes und eine Breite kleiner als die Breite des Längsschlitzes besitzt, und eine an der Deckplatte angeordneten Haltevorrichtung für die Gewindeplatte zum Einstecken in die Profilschiene aufweist, in der die Gewindeplatte mit Abstand und parallel zur Deckplatte gehalten ist.

Solche Befestigungsbaugruppen sind beispielsweise in der EP 1 902 222 B1 oder der DE 10 2007 014 795 A1 gezeigt. Weitere Befestigungsvorrichtungen dieser Art sind aus der EP 0 978 663 A1 und der WO 2016/188708 A1 bekannt.

Zum Befestigen der Last an der Profilschiene wird eine solche Befestigungsvorrichtung mit der Gewindeplatte so ausgerichtet, dass die Längsrichtung der Gewindeplatte im Wesentlichen mit der Längsrichtung der Profilschiene übereinstimmt. Anschließend wird die Befestigungsvorrichtung mit der Haltevorrichtung und der Gewindeplatte in den Längsschlitz eingeschoben, bis die Deckplatte an der Außenseite der Profilschiene aufliegt.

Nachfolgend wird die Befestigungsvorrichtung aus dieser Zwischenmontageposition um eine Drehachse in eine Vormontageposition gedreht, in der die Gewindeplatte die Schlitzflanken hintergreift. In dieser Position ist die Befestigungsvorrichtung bereits gegen die Profilschiene verklemmt, so dass der Monteur beide Hände frei hat. Abschließend wird die Gewindeplatte in die Endmontageposition von der Innenseite gegen die Unterseiten der Schlitzflanken gezogen, so dass die Schlitzflanken zwischen der Gewindeplatte und der Deckplatte und/oder dem Anbauteil geklemmt sind, wodurch das Anbauteil an der Profilschiene fixiert ist. Die Deckplatte kann als schwach dimensioniertes einzig der Aufgabe dienen, die Befestigungsvorrichtung vorläufig mit der Schiene zu verklemmen. Wenn die Deckplatte aus einem Kunststoff besteht, kann sie einstückig mit dem Haltekäfig ausgebildet sein. Die Deckplatte und der Haltekäfig können aber auch als zwei getrennt hergestellte Teile in geeigneter Weise aneinander befestigt sein, wobei sie auch aus unterschiedlichen Werkstoffen bestehen können.

Die Befestigungsvorrichtung ermöglicht es also, die Gewindeplatte in die Profilschiene einzuführen und anschließend in die Vormontageposition zu drehen.

Aus Gewichts- und Kostengründen sind die Deckplatte und die Haltevorrichtung häufig aus Kunststoff hergestellt. Die Gewindeplatte, die Profilschiene sowie die Last bzw. ein Anbauteil, an dem die Last gehalten ist, sind häufig aus Metall hergestellt. Die Deckplatte befindet sich bei den in den vorstehend genannten Schriften offenbarten Befestigungsvorrichtungen in der Endmontageposition jeweils zwischen der Last und der Profilschiene, wird also zwischen der Last und der Profilschiene geklemmt. Der Kunststoff kann aber alterungsbedingt oder aufgrund hoher Temperaturen, beispielsweise bei einem Brand, seine Festigkeit ganz oder teilweise verlieren, wodurch die Klemmwirkung zwischen Last, Gewindeplatte und Profilschiene reduziert werden und die Befestigung der Last nicht mehr sichergestellt sein kann. Alternativ sind, beispielsweise aus der EP 1 775 482 B1, Befestigungsvorrichtungen mit einer Deckplatte aus Metall bekannt, bei denen die vorstehend beschriebenen Festigkeitsprobleme nicht auftreten. Allerdings ist die Herstellung der Befestigungsvorrichtung aus Metall aufwändiger. Des Weiteren ist eine solche Befestigungsvorrichtung schwerer als eine Befestigungsvorrichtung aus Kunststoff.

Aufgabe der Erfindung ist es, eine Befestigungsbaugruppe der eingangs genannten Art bereitzustellen, die unabhängig von der Materialwahl für die Befestigungsvorrichtung eine zuverlässige Befestigung der Last an der Profilschiene ermöglicht.

Hauptmerkmale der Erfindung sind im kennzeichnenden Teil des Anspruches 1 angegeben. Ausgestaltungen sind Gegenstand der Ansprüche 2 bis 12.

Zur Lösung der Aufgabe ist bei einer Befestigungsbaugruppe mit einer Profilschiene und einer Befestigungsvorrichtung zur Befestigung einer Last an einer Profilschiene, die einen im Wesentlichen C-förmigen Querschnitt und einen Längsschlitz aufweist, wobei die Befestigungsvorrichtung eine Deckplatte, deren Länge und/oder Breite größer ist als die Breite des Längsschlitzes der Profilschiene, eine Gewindeplatte, die eine Gewindebohrung aufweist und eine Länge größer als die Breite des Längsschlitzes und eine Breite kleiner als die Breite des Längsschlitzes besitzt, und eine an der Deckplatte angeordneten Haltevorrichtung für die Gewindeplatte zum Einstecken in die Profilschiene aufweist, in der die Gewindeplatte mit Abstand und parallel zur Deckplatte gehalten ist, vorgesehen, dass die Deckplatte wenigstens eine Sollverformungsstelle aufweist, wobei die Sollverformungsstelle derart ausgebildet ist, dass die Deckplatte unter einer auf die Befestigungsvorrichtung wirkenden Kraft eine Verformung der Deckplatte auf ein Maß kleiner als die Breite des Längsschlitzes der Profilschiene ermöglicht.

Die Deckplatte wird grundsätzlich bei solchen Befestigungsvorrichtungen nur benötigt, um die Befestigungsvorrichtung, insbesondere die Gewindeplatte in der Profilschiene zu positionieren, bis die Gewindestange (z.B. auch eine Schraube) in die Gewindeplatte eingeschraubt und/oder eine Last an der Gewindestange befestigt ist. Sobald die Gewindestange und/oder die Last mit der Gewindeplatte verbunden sind, wird die Befestigungsvorrichtung nicht mehr benötigt, da die Positionierung der Gewindeplatte über die Gewindestange und/oder die Last erfolgt. Die Last wird nach der Endmontage von einem hinreichend stabilen Element des Anbauteils abgetragen, wobei die Profilschiene dann zwischen dem Anbauteil und der Gewindeplatte verklemmt ist.

Der Erfindung liegt der Grundgedanke zugrunde, eine Befestigungsbaugruppe bereitzustellen, bei der sich die Deckplatte in der Endmontagestellung; in der die Profilschiene zwischen der Gewindeplatte und der Last, also dem Anbauteil, geklemmt ist, nicht mehr im Kraftfluss befindet, so dass die Last unmittelbar auf der Profilschiene aufliegt und die Schlitzflanken der Profilschiene unmittelbar zwischen der Gewindeplatte und dem Anbauteil geklemmt sind.

Dies wird dadurch erreicht, dass die Deckplatte so verformbar ist, dass diese zumindest abschnittsweise in den Längsschlitz eintauchen kann und nicht mehr auf der Außenseite der Profilschiene bzw. der Schlitzflanken aufliegt. Dadurch kann die zu befestigende Last unmittelbar auf der Profilschiene aufliegen und die Deckplatte bzw. die Befestigungsvorrichtung befindet sich nicht im Kraftfluss zwischen der Last und der Profilschiene. Die Verformung kann entlang spezieller Sollverformungsstellen oder über eine größere Breite der Deckplatte durch kontinuierliches Verbiegen ablaufen.

Da sich die Deckplatte nicht im Kraftfluss befindet, kann diese aus einem beliebigen Material hergestellt werden. Es muss lediglich während der Montagephase der Last bzw. beim Einsetzen der Befestigungsvorrichtung in die Profilschiene eine ausreichende Festigkeit vorhanden sein, um die Gewindeplatte in der Profilschiene zu positionieren. Die Befestigungsvorrichtung, insbesondere die Deckplatte, kann sehr leicht ausgebildet werden, da diese lediglich die Gewindeplatte halten und im Längsschlitz der Profilschiene positionieren muss.

Die Verformung der Deckplatte erfolgt vorzugsweise, indem Bereiche der Deckplatte, die auf der Profilschiene bzw. den Schlitzflanken aufliegen, bei einer Bewegung der Befestigungsvorrichtung in den Längsschlitz hinein von den Schlitzflanken so verdrängt werden, dass die Breite der Deckplatte kleiner ist als die Breite des Längsschlitzes. Dadurch kann die Deckplatte in den Längsschlitz eintauchen und/oder die Schlitzflanken zur Auflage der Last freigeben.

Die Befestigungsvorrichtung wird beispielsweise durch eine auf die Befestigungsvorrichtung wirkende Kraft in den Längsschlitz gedrückt oder gezogen. Die Kraft kann beispielsweise eine auf die Deckplatte wirkende, in den Längsschlitz gerichtete Druckkraft sein, durch die die Deckplatte in den Längsschlitz hineingedrückt wird. Die Last kann unmittelbar auf der Deckplatte aufliegen und diese in den Längsschlitz drücken. An der Last oder an der Deckplatte können aber auch geeignete Mittel, beispielsweise Vorsprünge vorgesehen sein, durch die die Deckplatte bereits vor dem flächigen Aufliegen der Last verformt wird.

Die Kraft kann aber auch eine an der Haltevorrichtung und/oder der Gewindeplatte angreifende Druck- oder Zugkraft sein, durch die die mit der Haltevorrichtung verbundene Deckplatte in den Längsschlitz gezogen wird. Beispielsweise kann die Kraft über die in die Gewindeplatte eingedrehte Gewindestange aufgebracht werden. Unabhängig von der Art der Krafteinleitung erfolgt die Verformung der Deckplatte vorzugsweise durch ein Verdrängen zumindest eines Bereiches der Deckplatte durch die Schlitzflanken des Längsschlitzes der Profilschiene.

Vorzugsweise ist die Deckplatte so ausgebildet, dass die Deckplatte in der Zwischenmontageposition nicht derart verformbar ist, dass diese zwischen den Schlitzflanken eintauchen kann, so dass eine zuverlässige Positionierung der Gewindeplatte gewährleistet ist, und in der Vormontageposition, in der die Gewindeplatte die Schlitzflanken des Längsschlitzes hintergreift, eine Verformung der Deckplatte, insbesondere durch die Schlitzflanken, erfolgen kann.

Beispielsweise kann die Deckplatte eine Grundplatte, deren Länge größer ist als Breite des Längsschlitzes der Profilschiene und deren Breite kleiner ist als die Breite des Längsschlitzes der Profilschiene, und zumindest eine an einem Längsrand der Grundplatte vorgesehene Seitenplatte aufweisen, wobei die Sollverformungszone zwischen der Grundplatte und den Seitenplatten vorgesehen ist. Durch Verformen der Sollverformungszone können die Seitenplatten so bewegt werden, dass die effektive Breite der Deckplatte auf die Breite der Grundplatte reduziert wird und damit kleiner ist als die Breite des Längsschlitzes.

Vorzugsweise sind zwei an entgegengesetzten, insbesondere parallelen, Rändern der Grundplatte angeordnete Seitenplatten vorgesehen, wobei jeweils eine Sollverformungsstelle zwischen der Grundplatte und den Seitenplatten vorgesehen ist, so dass die Deckplatte einen symmetrischen Aufbau aufweist.

Die Grundplatte kann bei einer solchen Ausführungsform durch zwei sich zwischen den Seitenplatten erstreckende Stege gebildet sein.

Alternativ kann die Grundplatte durch einen Rahmen gebildet sein.

Unabhängig von der Ausführungsform der Grundplatte, weicht die Richtung des Längsrandes der Grundplatte vorzugsweise von der Längsrichtung der Gewindeplatte ab. Die Grundplatte ist so zur Gewindeplatte ausgerichtet, dass in der Zwischenmontageposition die Grundplatte auf den Schlitzflanken aufliegt und ein Eintauchen der Befestigungsvorrichtung in den Längsschlitz verhindert, und in der Vormontageposition nur die Seitenplatte auf der Profilschiene aufliegt und sich die Grundplatte über dem Längsschlitz befindet. Dadurch ist sichergestellt, dass die Deckplatte in der Vormontagestellung nicht in den Längsschlitz eintauchen kann.

Die Sollverformungsstelle kann ein elastisch oder plastisch verformbares Biegegelenk sein, beispielsweise ein Filmscharnier. Durch solche Biegegelenke ist eine einfache Bereitstellung einer Sollverformungsstelle möglich. Eine elastische Verformbarkeit bietet zudem den Vorteil, dass bei einem Lösen der Last und einer Reduzierung der auf die Befestigungsvorrichtung wirkenden Kraft, die Deckplatte wieder in die Ausgangposition zurück federn kann, in der die Deckplatte breiter ist als der Längsschlitz. Dadurch ist die Gewindeplatte beispielsweise beim Lösen der Last und einem Aufbringen einer anderen Last, sicher im Längsschlitz positioniert.

Alternativ kann die Sollverformungsstelle eine Sollbruchstelle aufweisen, so dass Bereiche der Deckplatte beim Eintauchen in den Längsschlitz von einer Grundplatte abgetrennt, beispielsweise abgebrochen, werden.

An der der Haltevorrichtung entgegengesetzten Fläche der Deckplatte können vorstehende Halte- oder Ausrichteelemente für die Last vorgesehen sein. Diese können die Befestigungsvorrichtung und die Last relativ zueinander fixieren, so dass bei einem Drehen der Last die Befestigungsvorrichtung mitgedreht werden kann.

Vorzugsweise ist die Befestigungsvorrichtung ist in einer ersten Orientierung, in der die Längsrichtung der Gewindeplatte der Längsrichtung des Längsschlitzes entspricht, mit der Haltevorrichtung in eine Zwischenmontageposition in den Längsschlitz einführbar, in der die Deckplatte auf der Profilschiene aufliegt. Des Weiteren ist die Befestigungsvorrichtung von der Zwischenmontageposition um eine Drehachse in eine Vormontageposition drehbar, in der die Gewindeplatte die Schlitzflanken des Längsschlitzes hintergreift und in der die Deckplatte unter einer auf die Befestigungsvorrichtung wirkenden Last auf ein Maß kleiner als die Breite des Längsschlitzes der Profilschiene verformbar ist.

Vorzugsweise sind die Kanten der Schlitzflanken des Längsschlitzes abgerundet oder angeschrägt ausgebildet, so dass Bereiche der Deckplatte, beispielsweise Seitenplatten, an diesen entlang gleiten können bzw. bei einem Aufbringen einer Last durch diese verdrängt werden können.

Um ein Überdrehen der Befestigungsvorrichtung über die Vormontageposition hinaus zu vermeiden, kann an der Deckplatte und/oder an der Haltevorrichtung zumindest ein Drehanschlag vorgesehen sein, der in der Vormontageposition an der Profilschiene anliegt und ein Drehen über die Vormontageposition hinaus verhindert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Explosionsansicht einer ersten Ausführungsform einer erfindungsgemäßen Befestigungsbaugruppe;
- Fig. 2a: eine perspektivische Ansicht der Befestigungsbaugruppe aus Fig. 1;
- Fig. 2b: eine Schnittansicht durch die Befestigungsbaugruppe aus Fig. 2a
- Fig. 2c: eine Draufsicht auf die Befestigungsbaugruppe aus Fig. 2a;
- Fig. 3a: eine erste perspektivische Ansicht der Befestigungsvorrichtung der Befestigungsbaugruppe aus Fig. 2a;
- Fig. 3b: eine zweite perspektivische Ansicht der Befestigungsvorrichtung der Befestigungsbaugruppe aus Fig. 2a;
- Fig. 4a: eine Schnittansicht durch die Befestigungsvorrichtung aus Fig. 3a und Fig. 3b;
- Fig. 4b: eine Draufsicht auf die Befestigungsvorrichtung aus Fig. 3a und Fig. 3b;
- Fig. 4c: eine zweite Schnittansicht durch die Befestigungsvorrichtung aus Fig. 3a und Fig. 3b;
- Fig. 4d: eine Ansicht der Unterseite der Befestigungsvorrichtung aus Fig. 3a und Fig. 3b;
- Fig. 5a: eine erste perspektivische Ansicht der Montage einer Gewindeplatte in der Befestigungsvorrichtung aus Fig. 3a und Fig. 3b;
- Fig. 5b: eine zweite perspektivische Ansicht der Montage einer Gewindeplatte in der Befestigungsvorrichtung aus Fig. 3a und Fig. 3b;
- Fig. 6a: eine erste perspektivische Ansicht der Befestigungsvorrichtung aus Fig. 3a und Fig. 3b mit einer Gewindeplatte;
- Fig. 6b: eine zweite perspektivische Ansicht der Befestigungsvorrichtung aus Fig. 3a und Fig. 3b mit einer Gewindeplatte;
- Fig. 7a: eine Draufsicht auf die Befestigungsvorrichtung aus Fig. 6a und Fig. 6b;
- Fig. 7b: eine Schnittansicht durch die Befestigungsvorrichtung aus Fig. 6a und Fig. 6b; und
- Fig. 8: eine Draufsicht auf eine Befestigungsbaugruppe mit der Befestigungsvorrichtung aus Fig. 6a und Fig. 6b.

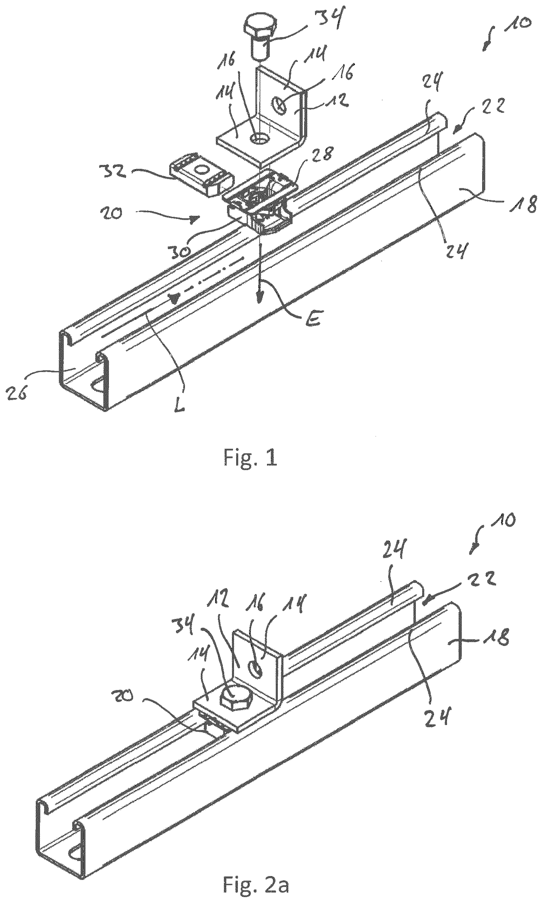

Die Figuren 1, 2a bis 3c sowie 8 zeigen eine Befestigungsbaugruppe 10 zur Befestigung einer Last, beispielsweise eines Anbauteils 12. Das Anbauteil 12 ist hier ein Winkelblech mit zwei rechtwinklig zueinander stehenden Schenkeln 14 mit jeweils einer Bohrung 16. Das Anbauteil 12 kann auch eine andere Form aufweisen. Des Weiteren kann das Winkelblech lediglich ein Adapter sein, um eine Last an der Profilschiene 18 zu befestigen.

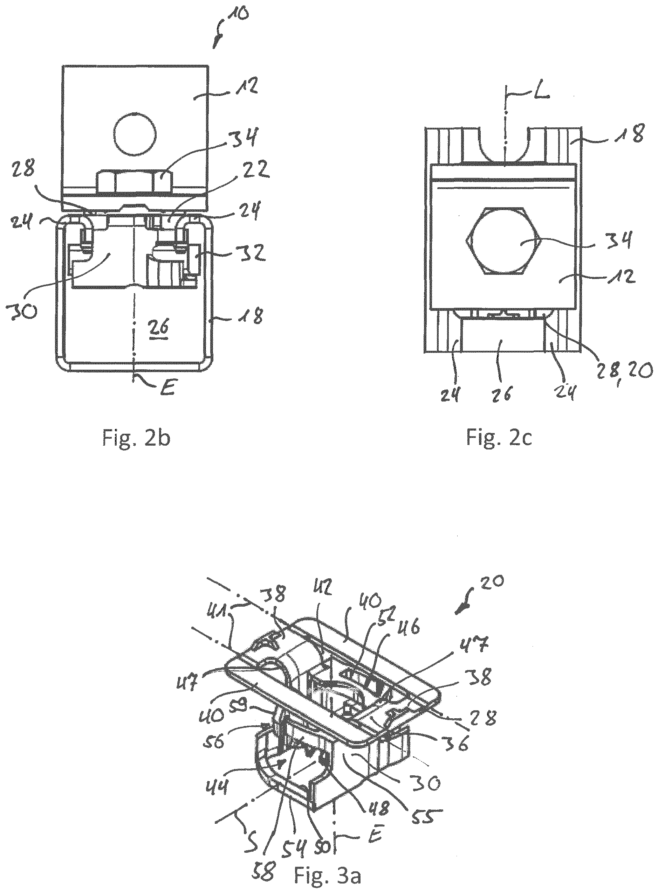

Die in den Figuren 3a bis 7b gezeigte Befestigungsbaugruppe 10 weist eine Profilschiene 18 sowie eine Befestigungsvorrichtung 20 auf. Die Profilschiene 18 hat einen im Wesentlichen C-förmigen Querschnitt und weist einen Längsschlitz 22 auf, der von zwei im Wesentlichen parallelen Schlitzflanken 24 begrenzt ist. Hinter den Schlitzflanken 24 ist ein Aufnahmeraum 26 vorgesehen.

Die in den Figuren 2 bis 8 gezeigte Befestigungsvorrichtung 20 weist eine Deckplatte 28, eine Haltevorrichtung 30 für eine Gewindeplatte 32, eine Gewindeplatte 32 sowie eine Gewindestange 34 auf.

Mit der Befestigungsvorrichtung 20 kann die Gewindeplatte 32 in den Längsschlitz 22 eingeführt und in diesem um eine Drehachse D in eine Vormontageposition gedreht werden, in der die Gewindeplatte 32 die Schlitzflanken 24 hintergreift. Anschließend kann die Gewindeplatte 32 durch die Gewindestange 34 gegen das Anbauteil 12 in eine Endmontageposition gezogen werden, in der die Schlitzflanken 24 zwischen dem Anbauteil 12 und der Gewindeplatte 32 geklemmt sind, wodurch das Anbauteil 12 an der Profilschiene 18 fixiert ist.

Die Deckplatte 28 ist im Wesentlichen rechtwinklig (alternativ polygon, oval oder sternförmig) ausgebildet und weist eine Grundplatte 36 auf, die aus zwei parallelen Stegen 38 gebildet ist, sowie zwei Seitenplatten 40, die an entgegengesetzten Rändern der Grundplatte 36 um eine Sollverformungsstelle 41 schwenkbar gelagert sind. Beispielsweise ist die Sollverformungsstelle 41 zwischen der Grundplatte 36 und den Seitenplatten 40 jeweils durch ein Filmscharnier gebildet. Die Deckplatte 28 weist des Weiteren eine Öffnung 42 für die Gewindestange 34 auf.

Die Haltevorrichtung 30 erstreckt sich in einer Einsteckrichtung E im Wesentlichen senkrecht von der Deckplatte 28 weg und weist einen im Wesentlichen parallel zur Ebene der Deckplatte 28 verlaufende Aufnahme 44 für die Gewindeplatte 32 auf, in der die Gewindeplatte 32 im Wesentlichen parallel zur Deckplatte 28 gehalten werden kann. Die Aufnahme 44 erstreckt sich durch die Haltevorrichtung 30 hindurch, so dass die Gewindeplatte 32 in eine quer zur Einsteckrichtung E verlaufenden Einschubrichtung S in die Aufnahme 44 eingeschoben werden kann.

Durch die Deckplatte 28 sowie die Haltevorrichtung 30 erstreckt sich eine in Einsteckrichtung E verlaufende Durchtrittsöffnung 46 für die Gewindestange 34.

Die Aufnahme 44 wird an einer der Deckplatte 28 zugewandten Oberseite 48 und an einer der Deckseite abgewandten Unterseite 50 jeweils von einem Rahmen 52, 54 begrenzt. Die Höhe der Aufnahme 44 entspricht im Wesentlichen der Höhe der Gewindeplatte 32, so dass eine eingeschobene Gewindeplatte 32 in Einsteckrichtung E kein oder nur ein geringes Spiel aufweist. Die Rahmen 52, 54 sind durch zwei bezüglich der Durchtrittsöffnung 46 diametral gegenüberliegende Stege 55 verbunden, die die seitliche Begrenzung der Aufnahme 44 bilden.

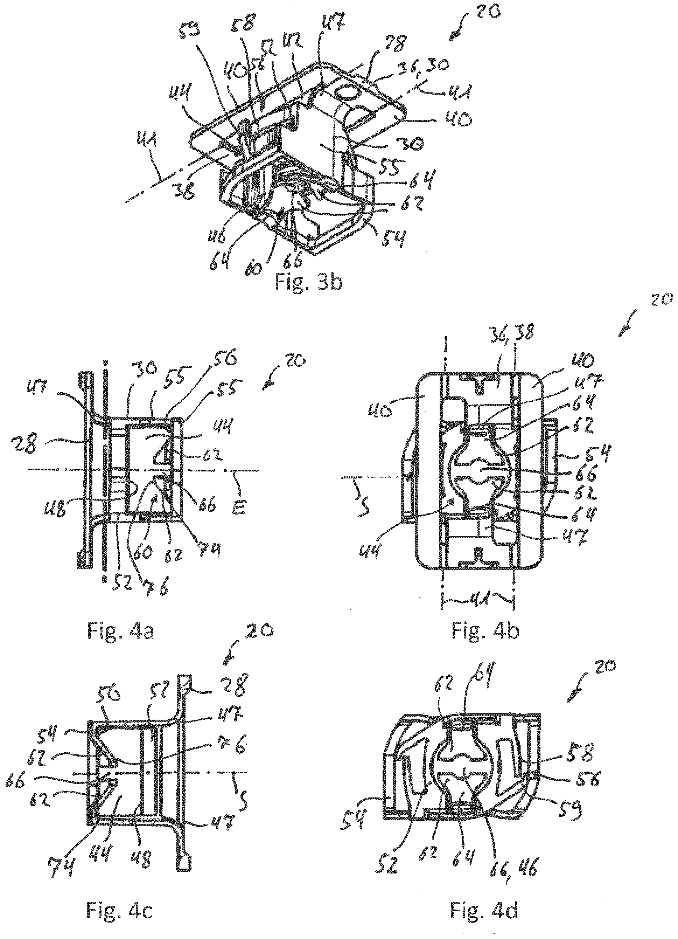

Wie in den Figuren 3a, 3b und 4d zu sehen ist, sind am oberen Rahmen 52 des Weiteren außenseitig zwei Federanordnungen 56 vorgesehen, die bezüglich der Drehachse D diametral gegenüberliegend angeordnet sind und jeweils zwei bezüglich der Drehachse D 46 radial federnde Federlaschen 58, 59 aufweisen. Die Federlaschen 58, 59 erstrecken sich jeweils bezüglich der Drehachse D radial nach außen weg und sind in Umfangsrichtung bezüglich der Drehachse D gekrümmt. Des Weiteren erstrecken sich die Federlaschen 58, 59 einer Federanordnung 56 bezüglich einer Umfangsrichtung um die Haltevorrichtung 30 bzw. um die Drehachse D in entgegengesetzte Richtungen und aufeinander zu.

Wie insbesondere in Figur 4d zu sehen ist, überlappen sich die Federlaschen 58, 59 einer Federanordnung 56 jeweils in radialer Richtung bezüglich der Drehachse D und weisen unterschiedliche Krümmungen auf.

Am unteren Rahmen 54 ist des Weiteren eine konzentrisch zur Drehachse D angeordnete und in die Aufnahme 44 ragende Halteeinrichtung 60 für die Gewindeplatte 32 vorgesehen. Wie in den Figuren 4a und 4c zu sehen ist, ist die Halteeinrichtung 60 mit einem ersten Ende 74 am Rahmen 54 und somit an der Haltevorrichtung 30 befestigt und erstreckt sich mit einem zweiten, freien Ende in der Art eines Dorns 76 entgegengesetzt der Einsteckrichtung E in die Aufnahme 44.

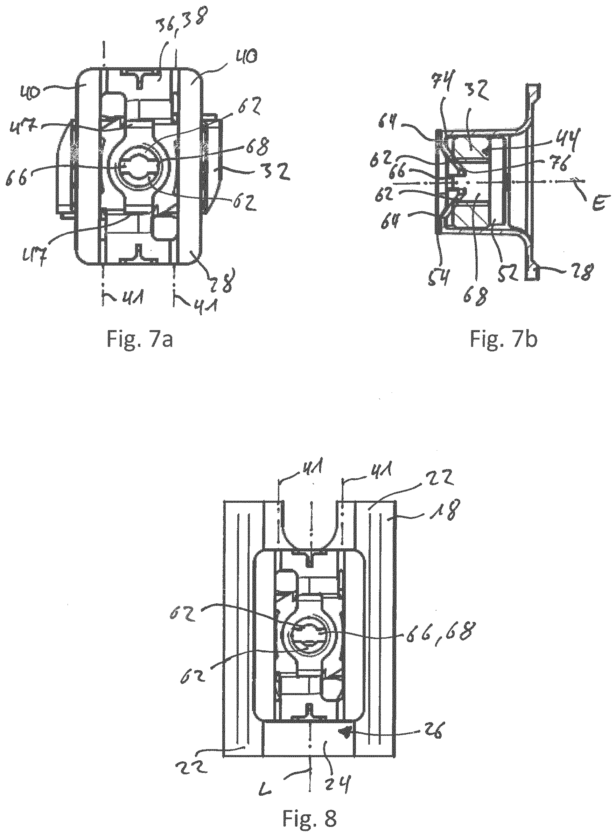

Die Halteeinrichtung 60 erstreckt sich in eine Bohrung 68 der Gewindeplatte 32 und fixiert so die Gewindeplatte 32 in der Aufnahme 44. Wie in Figur 7b zu sehen ist, ragt das freie Ende 76 in die Bohrung 68 und liegt am Bohrungsdurchmesser an, so dass die Gewindeplatte 32 spielfrei gehalten ist, wobei die Bohrung 68 zur Drehachse D zentriert ist.

Wie in Figur 7b des Weiteren zu sehen ist, nimmt der Umkreisdurchmesser der Halteeinrichtung 60 vom freien Ende 76 weg zu, so dass sich die Halteeinrichtung 60 zu ihrem freien Ende hin verjüngt, wodurch sich die Halteeinrichtung 60 bei Bohrungen 68 mit verschiedenen Durchmessern unterschiedlich weit in die Bohrung 68 erstrecken und jeweils am unteren Rand der Bohrung anliegen kann.

Wie insbesondere in den Figuren 3b und 4d zu sehen ist, weist die Halteeinrichtung 60 zwei, in Umfangsrichtung bezüglich der Durchtrittsöffnung 46 gleichmäßig verteilt angeordnete Halteelemente 62 auf. Jedes der Halteelemente 62 ist jeweils über eine Federlasche 64 federnd mit dem Rahmen 54 verbunden. Genau genommen federn die Halteelemente 62 im Wesentlichen um eine Kreisbahn, deren Mittelpunkt jeweils der Anbindungspunkt der Federlaschen an der Haltevorrichtung 30 ist. Der Abstand der Außenwandung der Halteelemente 62 von der Drehachse D nimmt in Einsteckrichtung E zu. Die Umhüllende der Halteelemente 62 weist im Wesentlichen eine konusförmige Oberfläche auf.

Des Weiteren weist die Halteeinrichtung 60 eine in Einsteckrichtung E verlaufende, konzentrisch zur Durchtrittsöffnung 46 angeordnete Öffnung 66 auf. Da die Halteelemente 62 federnd gelagert sind, können diese auch in radialer Richtung bezüglich der Durchtrittsöffnung 46 federnd nachgeben, so dass die Öffnung 66 senkrecht zur Einsteckrichtung E, also bezüglich der Durchtrittsöffnung 46 in radialer Richtung, elastisch aufweitbar ist.

Wie in den Figuren 3a und 3b zu sehen ist, ist die Haltevorrichtung 30 über als Federlaschen ausgebildete Federelemente 47 mit der Deckplatte 28 verbunden, so dass die Haltevorrichtung 30 in Einsteckrichtung E federnd mit der Deckplatte 28 gekoppelt ist. Die Federlaschen erstrecken sich bogenförmig zwischen der Deckplatte 28 und der Haltevorrichtung 30, wobei ein an der Haltevorrichtung 30 vorgesehener Abschnitt im Wesentlichen in Einsteckrichtung E verläuft und ein an der Deckplatte 28 vorgesehener Abschnitt im Wesentlichen in der Ebene der Deckplatte 28 verläuft. Durch die Federelemente 47 ist die Gewindeplatte 32 in Einsteckrichtung E relativ zur Deckplatte 28 elastisch verschiebbar.

Die Gewindestange 34 weist ein zum Innengewinde der Gewindeplatte 32 korrespondierendes Außengewinde auf, mit dem sich die als Schraube ausgebildete Gewindestange 34 in die Bohrung der Gewindeplatte 32 erstreckt. Die Gewindestange 34 stützt sich des Weiteren mit einem Kopf 35 am Anbauteil 12 ab.

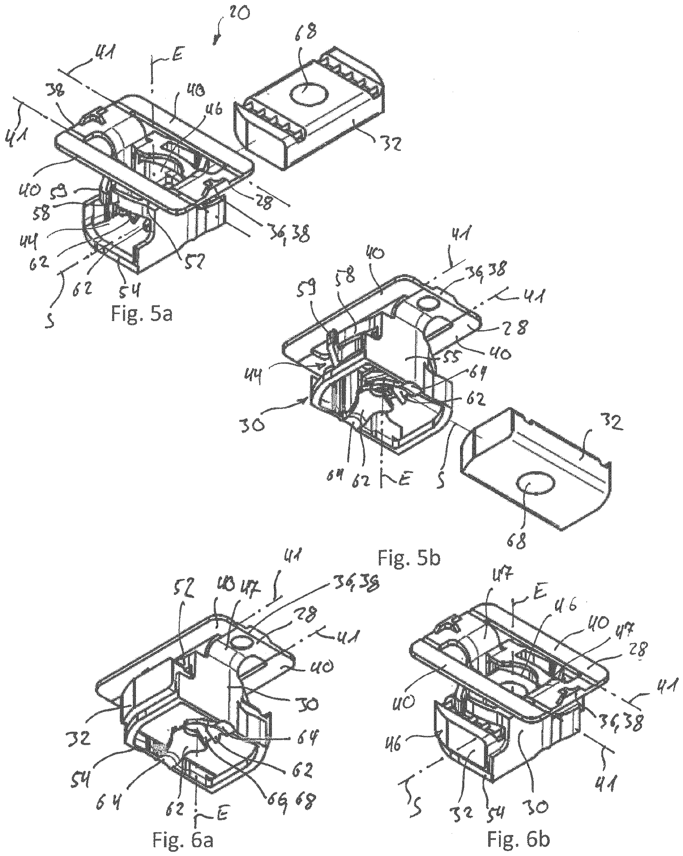

Zur Befestigung des Anbauteils 12 an der Profilschiene 18 wird zunächst eine Gewindeplatte 32 in Einschubrichtung S in die Aufnahme 44 eigeschoben (Figuren 5a und 5b). Die Gewindeplatte 32 ist im Wesentlichen rechteckig ausgebildet, wobei die Breite der Gewindeplatte 32 kleiner ist als der Abstand der beiden Schlitzflanken 24 und die Länge der Gewindeplatte 32 größer ist als der Abstand der beiden Schlitzflanken 24 und im Wesentlichen der Breite des Aufnahmeraums 26 entspricht. Die Gewindeplatte 32 hat des Weiteren eine Bohrung 68 mit einem Innengewinde.

Die Halteelemente 62 können in Einsteckrichtung E so weit federnd nachgeben, so dass diese das Einschieben der Gewindeplatte 32 nicht oder nur geringfügig behindern. Insbesondere können diese vollständig aus der Aufnahme 44 herausfedern. Sobald die Gewindeplatte 32 so weit in die Aufnahme 44 eingeschoben ist, dass die Bohrung 68 konzentrisch zur Durchtrittsöffnung 46 liegt, federn die Halteelemente 62 in die Bohrung 68. Die Halteelemente 62 federn so weit in die Bohrung 68 ein, bis die radiale Außenseite der Halteelemente 62 jeweils am unteren Rand des Bohrungsdurchmessers der Bohrung 68 anliegt (Figuren 6a und 6b). Da der Querschnitt der Halteeinrichtung 62 am ersten Ende 74 größer ist als der Bohrungsdurchmesser der Bohrung 68 und der Querschnitt der Halteeinrichtung 60 am zweiten Ende 76 kleiner ist als der Durchmesser der Bohrung 68, ist die Gewindeplatte 32 in der Aufnahme 44 so zentriert, dass die Bohrung 68 konzentrisch zur Durchtrittsöffnung 46 angeordnet ist.

Die Gewindestange 34 oder ein Schraubenelement kann anschließend durch die Durchtrittsöffnung 46 in die Bohrung 68 der Gewindeplatte 32 eingeführt werden. Die Gewindestange 34 kann dabei vor oder nach dem Einsetzen der Befestigungsvorrichtung 20 in die Profilschiene 18 eingeschoben werden.

Da die Halteelemente 62 federnd gelagert sind, kann die Gewindestange 34 das freie Ende 76 bzw. die Halteelemente 62 aus der Bohrung 68 herausdrängen. Insbesondere kann sich die Gewindestange 34 zwischen den aus der Bohrung 68 herausgedrängten Halteelemente 62 durch die Öffnung 66 erstrecken. Wird die Gewindestange 34 aus der Bohrung 68 herausgedreht, können die Halteelemente 62 wieder in die Bohrung 68 einfedern und die Gewindeplatte 32 halten.

Nach dem Einsetzen der Gewindeplatte 32 in die Aufnahme 44 wird die Befestigungsvorrichtung 20 mit der Gewindeplatte 32 so ausgerichtet, dass die Längsrichtung der Gewindeplatte 32 im Wesentlichen der Längsrichtung L des Längsschlitzes 22 entspricht. Die Befestigungsvorrichtung 20 wird so weit in Einsteckrichtung E in den Längsschlitz 22 in eine Zwischenmontageposition eingeschoben, bis die Deckplatte 28 an den Schlitzflanken 24 aufliegt und sich die Gewindeplatte 32 in Einsteckrichtung E hinter den Schlitzflanken befindet. Die Breite der Haltevorrichtung 30 sowie die Breite der Gewindeplatte 32 sind kleiner als die Breite des Längsschlitzes 22, so dass die Haltevorrichtung 30 mit der Gewindeplatte 32 in den Längsschlitz 22 eingeschoben werden kann.

Anschließend wird die Befestigungsvorrichtung 20 in Drehrichtung D in eine Vormontageposition gedreht, in der die Gewindeplatte 32 die Schlitzflanken 24 hintergreift. Vorzugsweise wird die Befestigungsvorrichtung 20 um ca. 90° gedreht. Wie in Figur 8 zu sehen ist, verlaufen die Sollverformungsstellen 41 zwischen der Grundplatte 38 und den Seitenplatten 40 in dieser Position in Längsrichtung L, wobei sich die Sollverformungsstellen 41 in Einsteckrichtung E über dem Längsschlitz 22 befinden.

In dieser Vormontageposition sowie in der vorangehend beschriebenen Zwischenmontageposition liegen die Federanordnungen 56 an den einander zugewandten Rändern der Schlitzflanken 24 an und zentrieren die Befestigungsvorrichtung 20 im Längsschlitz 22 und halten diese spielfrei, so dass die Befestigungsvorrichtung 20 nicht aus dem Längsschlitz 22 fallen kann. Da die Federanordnungen 56 jeweils zwei Federlaschen 58, 59 aufweisen, ist die Befestigungsvorrichtung 20 zuverlässig, auch bei einer Drehung entgegen der Drehrichtung D, im Längsschlitz 22 zentriert und durch Klemmung gehalten.

An der Deckplatte 28, der Haltevorrichtung 30 und/oder an der Gewindeplatte 32 können Anschläge vorgesehen sein, die ein Drehen der Befestigungsvorrichtung 20 in Drehrichtung D über die Vormontageposition hinaus verhindern. Beispielsweise sind die Anschläge an den Federlaschen 58, 59 vorgesehen.

Abschließend wird die Gewindeplatte 32 durch die Gewindestange 34 entgegen der Einsteckrichtung E gegen das Anbauteil 12 gezogen, um die Schlitzflanken 24 zwischen dem Anbauteil 12 und der Gewindeplatte 32 zu verklemmen. Da die Haltevorrichtung 30 federnd mit der Deckplatte 28 verbunden ist, können die Deckplatte 28 und die Haltevorrichtung 30 aufeinander zu bewegt werden.

Die Deckplatte 28 wird dabei vom Anbauteil 12 in den Längsschlitz 22 gedrängt, wobei die Seitenplatten 40 durch die Schlitzflanken 24 um die Sollverformungsstellen 41 umgefaltet werden, so dass die Deckplatte 28 in den Längsschlitz 22 eintauchen kann. Die Seitenplatten 40 gleiten dabei auf den Schlitzflanken 24, die nach oben, also auf der dem Aufnahmeraum 26 abgewandten Seite, abgerundete Kanten aufweisen.

In der Endmontageposition ist die Deckplatte 28 in den Längsschlitz 22 eingetaucht und das Anbauteil 12 liegt unmittelbar auf den Schlitzflanken 24 der Profilschiene 18 auf. Die Schlitzflanken 24 sind also unmittelbar zwischen der Gewindeplatte 32 und dem Anbauteil 12 geklemmt. Die Deckplatte 28 befindet sich nicht im Kraftfluss zwischen der Gewindeplatte 32 bzw. dem Anbauteil 12 und der Profilschiene 18.

Beispielsweise besteht die Befestigungsvorrichtung 20 aus Kunststoff und die Gewindeplatte 32 sowie die Profilschiene 18 sind aus Metall hergestellt. Bei Verwendung der vorstehend beschriebenen Befestigungsvorrichtung 20 befindet sich nach dem Spannen der Gewindeplatte 32 gegen die Schlitzflanken 24 bzw. gegen die Last in der endgültigen Montageposition unter Last somit kein Kunststoff im Kraftfluss, wodurch die Zuverlässigkeit der Verbindung des Anbauteils 12 an der Profilschiene 18 erhöht werden kann.

Durch die Halte- und Zentriervorrichtung 60 wird die Gewindeplatte 32 in der Haltevorrichtung 30 fixiert, so dass diese nicht während der Montage aus der Aufnahme 44 fallen kann. Da die Halteelemente 62 federnd ausgebildet sind, können diese auch unterschiedliche Dicken der Gewindeplatte 32 ausgleichen. Insbesondere kann die Höhe der Aufnahme 44 in Einsteckrichtung E auch größer sein als die Dicke der Gewindeplatte 32, wobei die Halteeinrichtung 60 die Gewindeplatte 32 federbeaufschlagt gegen die Oberseite oder die Unterseite der Aufnahme 44 drängt.

Die Erfindung ist nicht auf eine der vorbeschriebenen Ausführungsformen beschränkt, sondern in vielfältiger Weise abwandelbar.

Beispielsweise können die Sollverformungsstellen 41 auch plastisch verformbar oder als Sollbruchstelle ausgebildet sein.

### Bezugszeichenliste

- 10: Befestigungsbaugruppe
- 12: Anbauteil
- 14: Schenkel des Anbauteils
- 16: Bohrung des Anbauteils
- 18: Profilschiene
- 20: Befestigungsvorrichtung
- 22: Längsschlitz
- 24: Schlitzflanken
- 26: Aufnahmeraum
- 28: Deckplatte
- 30: Haltevorrichtung
- 32: Gewindeplatte
- 34: Gewindestange
- 35: Kopf der Gewindestange
- 36: Grundplatte
- 38: Stege
- 40: Seitenplatten
- 41: Sollverformungsstelle
- 42: Öffnung in Deckplatte
- 44: Aufnahme
- 46: Durchtrittsöffnung
- 47: Federelement
- 48: Oberseite der Aufnahme
- 50: Unterseite der Aufnahme
- 52: Rahmen
- 54: Rahmen
- 55: Steg
- 56: Federanordnung
- 58: Federlasche
- 59: Federlasche
- 60: Halteeinrichtung
- 62: Halte- und Zentrierelement
- 64: Federlasche

- 66: Öffnung
- 68: Bohrung
- 70: Aufnahme
- 72: Rastelement
- 74: erstes Ende der Halteeinrichtung
- 76: freies Ende der Halteeinrichtung/Dorn

- E: Einsteckrichtung
- L: Längsrichtung
- S: Einschubrichtung

## Patentansprüche

1. Befestigungsbaugruppe mit einer Profilschiene (18) und einer Befestigungsvorrichtung (20) zur Befestigung einer Last an der Profilschiene (18), die einen im Wesentlichen C-förmigen Querschnitt und einen Längsschlitz (22) aufweist, wobei die Befestigungsvorrichtung eine Deckplatte (28) zur Auflage auf der Profilschiene (18),
eine Gewindeplatte (32), die eine Gewindebohrung (68) aufweist und eine Länge größer als die Breite des Längsschlitzes (22) und eine Breite kleiner als die Breite des Längsschlitzes (22) besitzt,
und eine an der Deckplatte (28) angeordneten Haltevorrichtung (30) für die Gewindeplatte (32) zum Einstecken in die Profilschiene (18) aufweist, in der die Gewindeplatte (32) mit Abstand und parallel zur Deckplatte (28) gehalten ist,
wobei die Deckplatte (28) wenigstens eine Sollverformungsstelle (41) und/oder eine gleichmäßig über einen Bereich verteilte Biegeelastizität aufweist, **dadurch gekennzeichnet, dass** die
Sollverformungsstelle (41) und/oder die Biegeelastizität derart ausgebildet ist, dass die Deckplatte (28) unter einer auf die Befestigungsvorrichtung (20) wirkenden Kraft eine Verformung der Deckplatte (28) auf ein Maß kleiner als die Breite des Längsschlitzes (22) der Profilschiene (18) ermöglicht, sodass sich die Deckplatte (28) in einer Endmontagestellung nicht mehr im Kraftfluss befindet.

2. Befestigungsbaugruppe nach Anspruch 1, **dadurch gekennzeichnet, dass** die Deckplatte (28) eine Grundplatte (36) aufweist, deren Länge größer ist als Breite des Längsschlitzes (22) der Profilschiene (18) und deren Breite kleiner ist als die Breite des Längsschlitzes (22) der Profilschiene (18), und zumindest eine an einem Längsrand der Grundplatte (36) vorgesehene Seitenplatte (40), wobei die Sollverformungsstelle (41) zwischen der Grundplatte (36) und den Seitenplatten (40) vorgesehen ist.

3. Befestigungsbaugruppe nach Anspruch 2, **dadurch gekennzeichnet, dass** zwei an entgegengesetzten, insbesondere parallelen, Rändern der Grundplatte (36) angeordnete Seitenplatten (40) vorgesehen sind, wobei jeweils eine Sollverformungsstelle (41) zwischen der Grundplatte (36) und den Seitenplatten (40) vorgesehen ist.

4. Befestigungsbaugruppe nach einem der Ansprüche 2 oder 3, **dadurch gekennzeichnet, dass** die Grundplatte (36) durch zwei sich zwischen den Seitenplatten (40) erstreckende Stege (38) gebildet ist.

5. Befestigungsbaugruppe nach einem der Ansprüche 2 oder 3, **dadurch gekennzeichnet, dass** die Grundplatte (36) durch einen Rahmen gebildet ist.

6. Befestigungsbaugruppe nach einem der Ansprüche 2 bis 5, **dadurch gekennzeichnet, dass** die Richtung des Längsrandes der Grundplatte (36) von der Längsrichtung der Gewindeplatte (32) abweicht.

7. Befestigungsbaugruppe nach einem der vorhergehenden Ansprüche,
**dadurch gekennzeichnet, dass** die Sollverformungsstelle (41) ein elastisch oder plastisch verformbares Biegegelenk ist.

8. Befestigungsbaugruppe nach einem der vorhergehenden Ansprüche,
**dadurch gekennzeichnet, dass** die Sollverformungsstelle (41) eine Sollbruchstelle aufweist.

9. Befestigungsbaugruppe nach einem der vorhergehenden Ansprüche,
**dadurch gekennzeichnet, dass** an der der Haltevorrichtung (30) entgegengesetzten Fläche der Deckplatte (28) vorstehende Halte- oder Ausrichteelemente für ein Anbauteil (12) vorgesehen sind.

10. Befestigungsbaugruppe (10) nach einem der vorhergehenden Ansprüche, **dadurch gekennzeichnet, dass**
die Befestigungsvorrichtung (20) in einer ersten Orientierung, in der die Längsrichtung der Gewindeplatte (32) der Längsrichtung des Längsschlitzes entspricht, mit der Haltevorrichtung (30) in eine Zwischenmontageposition in den Längsschlitz (22) einführbar ist, in der die Deckplatte (28) auf der Profilschiene (18) aufliegt, und
wobei die Befestigungsvorrichtung (20) von der Zwischenmontageposition um eine Drehachse (D) in eine Vormontageposition drehbar ist, in der die Gewindeplatte (32) die Ränder (24) des Längsschlitzes (22) hintergreift und in der die Deckplatte (28) unter einer auf die Befestigungsvorrichtung (20) wirkenden Last auf ein Maß kleiner als die Breite des Längsschlitzes (22) der Profilschiene (18) verformbar ist.

11. Befestigungsbaugruppe nach Anspruch 10, **dadurch gekennzeichnet, dass** die Ränder der Schlitzflanken (24) des Längsschlitzes (22) abgerundet oder angeschrägt ausgebildet sind.

12. Befestigungsbaugruppe nach einem der Ansprüche 10 oder 11, **dadurch gekennzeichnet, dass** an der Deckplatte (28) und/oder an der Haltevorrichtung (30) zumindest ein Drehanschlag vorgesehen ist, der in der Vormontageposition an der Profilschiene (18) anliegt und ein Drehen über die Vormontageposition hinaus verhindert.

## Claims

1. Fastening assembly comprising a profiled rail (18) and a fastening device (20) for fastening a load to the profiled rail (18) which has a substantially C-shaped cross-section and a longitudinal slot (22), wherein the fastening device has a cover plate (28) for placing on the profiled rail (18),
a threaded plate (32) which has a threaded bore (68) and a length that is greater than the width of the longitudinal slot (22) and a width that is smaller than the width of the longitudinal slot (22),
and a holding device (30) arranged on the cover plate (28) for the threaded plate (32) for inserting into the profiled rail (18), in which the threaded plate (32) is held at a distance from and parallel to the cover plate (28),
wherein the cover plate (28) has at least one set deformation point (41) and/or a bending elasticity distributed evenly over one region, **characterised in that** the
set deformation point (41) and/or the bending elasticity is/are designed such that the cover plate (28), under a force acting on the fastening device (20), allows a deformation of the cover plate (28) to a dimension that is smaller than the width of the longitudinal slot (22) of the profiled rail (18) so that the cover plate (28) is no longer in the force flow path in a final assembly position.

2. Fastening assembly according to claim 1, **characterised in that** the cover plate (28) has a base plate (36) the length of which is greater than the width of the longitudinal slot (22) of the profiled rail (18) and the width of which is smaller than the width of the longitudinal slot (22) of the profiled rail (18), and at least one side plate (40) provided on a longitudinal edge of the base plate (36), wherein the set deformation point (41) is provided between the base plate (36) and the side plates (40).

3. Fastening assembly according to claim 2, **characterised in that** two side plates (40) arranged on opposite, in particular parallel, edges of the base plate (36) are provided, wherein a respective set deformation point (41) is provided between the base plate (36) and the side plates (40).

4. Fastening assembly according to any one of claims 2 or 3, **characterised in that** the base plate (36) is formed by two webs (38) extending between the side plates (40).

5. Fastening assembly according to any one of claims 2 or 3, **characterised in that** the base plate (36) is formed by a frame.

6. Fastening assembly according to any one of claims 2 to 5, **characterised in that** the direction of the longitudinal edge of the base plate (36) deviates from the longitudinal direction of the threaded plate (32).

7. Fastening assembly according to any one of the preceding claims, **characterised in that** the set deformation point (41) is an elastically or plastically deformable bending joint.

8. Fastening assembly according to any one of the preceding claims, **characterised in that** the set deformation point (41) has a predetermined breaking point.

9. Fastening assembly according to any one of the preceding claims, **characterised in that** protruding holding or aligning elements for an attachment part (12) are provided on the surface of the cover plate (28) opposite the holding device (30).

10. Fastening assembly (10) according to any one of the preceding claims, **characterised in that**
the fastening device (20) in a first orientation, in which the longitudinal direction of the threaded plate (32) corresponds to the longitudinal direction of the longitudinal slot, can be inserted with the holding device (30) into an intermediate assembly position in the longitudinal slot (22), in which position the cover plate (28) rests on the profiled rail (18), and
wherein the fastening device (20) can be rotated from the intermediate assembly position about an axis of rotation (D) into a pre-assembly position in which the threaded plate (32) engages behind the edges (24) of the longitudinal slot (22) and in which the cover plate (28) is deformable under a load acting on the fastening device (20) to a dimension smaller than the width of the longitudinal slot (22) of the profiled rail (18).

11. Fastening assembly according to claim 10, **characterised in that** the edges of the slot flanks (24) of the longitudinal slot (22) are rounded or bevelled.

12. Fastening assembly according to any one of claims 10 or 11, **characterised in that** on the cover plate (28) and/or on the holding device (30) at least one rotary stop is provided which bears on the profiled rail (18) in the pre-assembly position and prevents rotation beyond the pre-assembly position.

## Revendications

1. Ensemble de fixation avec un rail profilé (18) et un dispositif de fixation (20) pour fixer une charge au rail profilé (18), qui présente une section transversale sensiblement en forme de C et une fente longitudinale (22), dans lequel le dispositif de fixation présente une plaque de recouvrement (28) destinée à reposer sur le rail profilé (18),
une plaque filetée (32) qui présente un trou taraudé (68) et qui comporte une longueur supérieure à la largeur de la fente longitudinale (22) et une largeur inférieure à la largeur de la fente longitudinale (22),
et un dispositif de maintien (30) pour la plaque filetée (32) disposé sur la plaque de recouvrement (28) et destiné à être inséré dans le rail profilé (18), dans lequel la plaque filetée (32) est maintenue à distance et parallèlement à la plaque de recouvrement (28),
dans lequel la plaque de recouvrement (28) présente au moins un point de déformation de consigne (41) et/ou une élasticité de flexion répartie uniformément sur une zone, **caractérisé en ce que**
le point de déformation de consigne (41) et/ou l'élasticité de flexion sont conçus de sorte que la plaque de recouvrement (28) permet, sous une force agissant sur le dispositif de fixation (20), une déformation de la plaque de recouvrement (28) à une dimension inférieure à la largeur de la fente longitudinale (22) du rail profilé (18), de sorte que la plaque de recouvrement (28) ne se trouve plus dans le flux de force dans une position de montage final.

2. Ensemble de fixation selon la revendication 1, **caractérisé en ce que** la plaque de recouvrement (28) présente une plaque de base (36) dont la longueur est supérieure à la largeur de la fente longitudinale (22) du rail profilé (18) et dont la largeur est inférieure à la largeur de la fente longitudinale (22) du rail profilé (18), et au moins une plaque latérale (40) prévue sur un bord longitudinal de la plaque de base (36), dans lequel le point de déformation de consigne (41) est prévu entre la plaque de base (36) et les plaques latérales (40).

3. Ensemble de fixation selon la revendication 2, **caractérisé en ce que** deux plaques latérales (40) sont prévues, disposées sur des bords opposés, en particulier parallèles, de la plaque de base (36), dans lequel un point de déformation de consigne (41) est respectivement prévu entre la plaque de base (36) et les plaques latérales (40).

4. Ensemble de fixation selon l'une quelconque des revendications 2 ou 3, **caractérisé en ce que** la plaque de base (36) est formée par deux traverses (38) s'étendant entre les plaques latérales (40).

5. Ensemble de fixation selon l'une quelconque des revendications 2 ou 3, **caractérisé en ce que** la plaque de base (36) est formée par un cadre.

6. Ensemble de fixation selon l'une quelconque des revendications 2 à 5, **caractérisé en ce que** la direction du bord longitudinal de la plaque de base (36) dévie de la direction longitudinale de la plaque filetée (32).

7. Ensemble de fixation selon l'une quelconque des revendications précédentes, **caractérisé en ce que** le point de déformation de consigne (41) est une articulation de flexion élastiquement ou plastiquement déformable.

8. Ensemble de fixation selon l'une quelconque des revendications précédentes, **caractérisé en ce que** le point de déformation de consigne (41) présente un point de rupture de consigne.

9. Ensemble de fixation selon l'une quelconque des revendications précédentes, **caractérisé en ce que** des éléments de maintien ou d'alignement d'une pièce rapportée (12) sont prévus en saillie sur la surface de la plaque de recouvrement (28) opposée au dispositif de maintien (30).

10. Ensemble de fixation (10) selon l'une quelconque des revendications précédentes, **caractérisé en ce**
**que** le dispositif de fixation (20), dans une première orientation dans laquelle la direction longitudinale de la plaque filetée (32) correspond à la direction longitudinale de la fente longitudinale, peut être introduit avec le dispositif de maintien (30) dans une position de montage intermédiaire dans la fente longitudinale (22), dans laquelle la plaque de recouvrement (28) repose sur le rail profilé (18), et
dans lequel le dispositif de fixation (20) peut être tourné autour d'un axe de rotation (D) de la position de montage intermédiaire à une position de prémontage dans laquelle la plaque filetée (32) s'engage derrière les bords (24) de la fente longitudinale (22) et dans laquelle la plaque de recouvrement (28) est déformable sous une charge agissant sur le dispositif de fixation (20) à une dimension inférieure à la largeur de la fente longitudinale (22) du rail profilé (18).

11. Ensemble de fixation selon la revendication 10, **caractérisé en ce que** les bords des flancs de fente (24) de la fente longitudinale (22) sont arrondis ou biseautés.

12. Ensemble de fixation selon l'une quelconque des revendications 10 ou 11, **caractérisé en ce qu'**au moins une butée de rotation est prévue sur la plaque de recouvrement (28) et/ou sur le dispositif de retenue (30) qui, dans la position de prémontage, repose contre le rail profilé (18) et empêche une rotation au-delà de la position de prémontage.
